# EUROPEAN PATENT SPECIFICATION

(11) **EP 3 404 884 B1**
(45) Date of publication and mention of the grant of the patent: **04.08.2021**
(21) Application number: 16884752.3
(22) Date of filing: 29.11.2016
(51) Int. Cl.: H04L 29/06, H04L 12/14, H04L 29/08, H04W 76/34, H04W 76/30

(54) **IP FLOW MIGRATION METHOD, DEVICE AND SYSTEM**
VERFAHREN, VORRICHTUNG UND SYSTEM ZUR MIGRATION VON IP-STRÖMEN
PROCÉDÉ, DISPOSITIF ET SYSTÈME DE MIGRATION DE FLUX D'IP

(30) Priority: 13.01.2016 CN 201610021966
(43) Date of publication of application: 21.11.2018
(73) Proprietor: ZTE Corporation, Shenzhen, Guangdong 518057 (CN)
(72) Inventor: ZHOU, Xiaoyun, Shenzhen Guangdong 518057 (CN); ZHOU, Xingyue, Shenzhen Guangdong 518057 (CN)
(74) Representative: Aipex B.V.
(86) International application number: PCT/CN2016/107724
(87) International publication number: WO 2017/121200

(56) References cited:
- WO-A1-2014/016676
- CN-A- 101 370 006
- CN-A- 101 374 339
- CN-A- 102 256 374
- ZTE: "MAPIM Call flows for Solution B", 3GPP DRAFT; S2-093038_E-MAIL-REV1-S2-092671 MAPIM CALL FLOWS FOR SOLUTION B(R9), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Hangzhou; 20090330 - 20090403, 16 April 2009 (2009-04-16), XP050629772, [retrieved on 2009-04-16]
- ZTE: "NBIFOM procedures over GERAN/UTRAN", 3GPP DRAFT; S2-152444 WAS 2280 NBIFOM GE-UTRAN FLOWS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dubrovnik, Croatia; 20150706 - 20150710 9 July 2015 (2015-07-09), XP050987638, Retrieved from the Internet: URL:http://www.3gpp.org/ftp/tsg_sa/WG2_Arc h/TSGS2_110_Dubrovnik/Docs/ [retrieved on 2015-07-09]

## Description

### TECHNICAL FIELD

The present invention relates to communication technologies, and in particular to an Internet Protocol (IP) flow mobility method, device, and system.

### BACKGROUND

With the development of communication technologies, the application of the 3rd Generation Partnership Project (3GPP) technology has become more and more widespread.

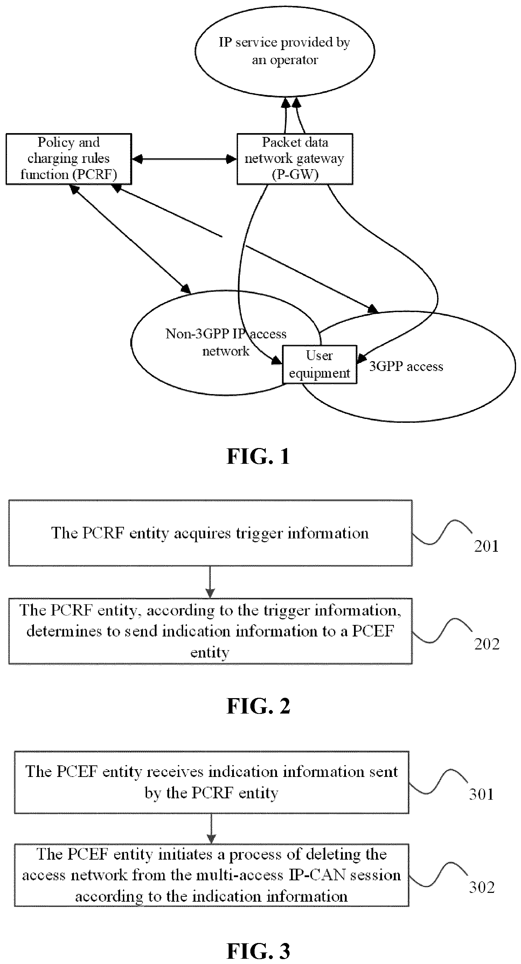

FIG. 1 is a schematic diagram of a scenario of an Internet Protocol (IP) flow mobility method according to an embodiment in related arts. As shown in FIG. 1, a user equipment (UE), which is covered by both a non-3GPP IP access network and a 3GPP access network at the same time, may establish a multi-access IP-Connectivity Access Network (IP-CAN) session with a network side. The UE may adopt the non-3GPP IP access network to establish, through a Packet Data Network Gateway (P-GW or PDN GW), a connection with an IP service provided by an operator. At the same time, the UE may also establish a connection with an IP service provided by an operator through the P-GW by adopting the 3GPP access network. The P-GW that the UE establishes the connections by using the non-3GPP IP access network and by using the 3GPP access network respectively is the same P-GW, and the P-GW is connected with a Policy and Charging Rules Function (PCRF) entity. It should be noted that, the UE negotiates with the network when initially establishing an IP-CAN session, and the PCRF determines whether a network-based IP flow mobility (NBIFOM) can be applied. When the UE adds an access to establish a multi-access IP-CAN session, the PCRF determines whether the NBIFOM can be applied again. "MAPIM Call flows for solution B", 3GPP TSG SA WG2 Meeting #72 TD S2-093038, relates to IP flow mobility based on PCC for network based mobility management procedures. "NBIFOM procedures over GERAN/UTRAN", ERSA WG2 Meeting #110 S2-152444, relates to routing rules signaled via 3GPP access, UE requested IP flow mapping via 3GPP access, UE-initiated removal of 3GPP access from the PDN connection, and network-initiated removal of 3GPP access from the PDN connection.

However, it is found that, in the process of implementing the above related art, the above solution cannot determine whether the NBIFOM can be applied when a network policy changes or when a UE subscription changes, thereby being not capable of determining that an access network is deleted from the multi-access IP-CAN session.

### SUMMARY

Embodiments of the present invention provide an IP flow mobility method, device, and system for solving the problem of being not capable of determining that an access network is deleted from the multi-access IP-CAN session. The invention is defined by the independent claims. Preferred embodiments are defined in the dependent claims.

### BRIEF DESCRIPTION OF DRAWINGS

FIG. 1 is a schematic diagram of a scenario of an IP flow mobility method according to an embodiment in related arts;
FIG. 2 is a flowchart of a first IP flow mobility method according to an embodiment of the present invention;
FIG. 3 is a flowchart of a second IP flow mobility method according to an embodiment of the present invention;
FIG. 4 is a flowchart of a third IP flow mobility method according to an embodiment of the present invention;
FIG. 5 is a flowchart of a fourth IP flow mobility method according to an embodiment of the present invention;
FIG. 6 is a flowchart of a fifth IP flow mobility method according to an embodiment of the present invention;
FIG. 7 is a schematic diagram of a first IP flow mobility device according to an embodiment of the present invention; and
FIG. 8 is a schematic diagram of a second IP flow mobility device according to an embodiment of the present invention.

### DETAILED DESCRIPTION

The embodiments of the present invention will be described hereinafter in detail with reference to the drawings

The IP flow mobility method provided by the embodiments of the present invention may be applied in a scenario that a user equipment (UE) establishes a multi-access IP-CAN session with a P-GW through at least two access networks, as well as a network policy is changed, or subscription information of the UE is changed. The two access networks may include a first access network and a second access network. For example, the two access networks may include a 3GPP access network and a non-3GPP access network. The IP flow mobility method provided by the embodiment may be implemented by an IP flow mobility device. The IP flow mobility device may be integrated in a PCRF entity or a P-GW, or may be set separately, and the IP flow mobility device may implement by adopting at least one of the following ways: software or hardware. The IP flow mobility method and device provided in the embodiment will be described in detail hereinafter.

FIG. 2 is a flowchart of a first IP flow mobility method according to an embodiment of the present invention. As shown in FIG. 2, the executor of the embodiment may be a PCRF entity, and the IP flow mobility method provided by the present invention is applied in a scenario that a UE establishes a multi-access IP-CAN session with a P-GW through at least two access networks. The IP flow mobility method includes the following steps.

In step 201, the PCRF entity acquires trigger information, and the trigger information includes information for deleting an access network from the multi-access IP-CAN session.

In this embodiment, the trigger information may include one of information that the network policy changes or information that subscription information of the UE changes.

In step 202, the PCRF entity, according to the trigger information, determines to send indication information to a policy and charging enforcement function (PCEF) entity.

In this embodiment, the indication information includes indicating the PCEF entity to delete one access network from the multi-access IP-CAN session so as to make the PCEF entity initiate a process of deleting the access network from the multi-access IP-CAN session.

In this embodiment, the indication information is used for indicating the PCEF entity to delete the access network from the multi-access IP-CAN session.

For example, the indication information includes at least one of the following information: indication information for a NBIFOM not supporting, indication information for the NBIFOM not authorizing, or indication information for deleting at least one access network.

In one exemplary embodiment, on the basis of the foregoing embodiments, the policy and charging rules information may further include identification information of an access network to be deleted.

In one exemplary embodiment, on the basis of the foregoing embodiments, the identification information of the access network to be deleted includes IP-CAN type information of the access network to be deleted.

In one exemplary embodiment, on the basis of the foregoing embodiments, the indication information may further include: indication information about migrating a service data flow transmitted in the access network to be deleted to a remaining access network. The remaining access network includes an access network, except for the access network to be deleted, of the at least two access networks.

In the embodiment, the PCRF entity acquires the trigger information, and the triggering information includes information for deleting an access network from the multi-access IP-CAN session; the PCRF entity determines to send indication information to the PCEF entity according to the trigger information, and the indication information includes indicating the PCEF entity to delete one access network from the multi-access IP-CAN session so as to make the PCEF entity initiate a process of deleting the access network from the multi-access IP-CAN session. It is implemented to delete an access network from the multi-access IP-CAN session when the network policy changes or the UE subscription changes. The problem that the IP flow mobility cannot be canceled when the network policy changes or when the UE subscription changes is avoided.

FIG. 3 is a flowchart of a second IP flow mobility method according to an embodiment of the present invention. As shown in FIG. 3, the executor of the embodiment may be a PCEF entity, and the IP flow mobility method provided by the present invention is applied in a scenario that a UE establishes a multi-access IP-CAN session with a P-GW through at least two access networks. The IP flow mobility method includes the following steps.

In step 301, the PCEF entity receives indication information sent by the PCRF entity.

In this embodiment, the indication information includes indication information about indicating that an access network is deleted from the multi-access IP-CAN session.

In this embodiment, the indication information is used for indicating the PCEF initiates a process of deleting the access network from the multi-access IP-CAN session.

For example, the indication information includes at least one of the following information: indication information for a NBIFOM not supporting, indication information for the NBIFOM not authorizing, or indication information for deleting at least one access network.

In one exemplary embodiment, on the basis of the foregoing embodiments, the indication information may further include: identification information of an access network to be deleted.

In one exemplary embodiment, on the basis of the foregoing embodiments, the identification information of the access network to be deleted is IP-CAN type information of the access network to be deleted.

In one exemplary embodiment, on the basis of the foregoing embodiments, the indication information may further include indication information about migrating a service data flow transmitted in the access network to be deleted to a remaining access network.

In step 302, the PCEF entity initiates a process of deleting the access network from the multi-access IP-CAN session according to the indication information.

In this embodiment, the step that the PCEF entity deletes the access network from the multi-access IP-CAN session according to the indication information includes at least the following implementations.

A first implementation, the PCEF deletes one access network of the multi-access IP-CAN session according to the indication information and a configuration policy. The indication information includes at least one of the following information: indication information for the NBIFOM not supporting, indication information for the NBIFOM not authorizing, or indication information for deleting at least one access network.

A second implementation, according to the indication information and the identification information of the access network to be deleted, the PCEF deletes an access network, which is identified by the identification information, in the multi-access IP-CAN session. The indication information includes at least one of the following information: indication information for the NBIFOM not supporting, indication information for the NBIFOM not authorizing, or indication information for deleting at least one access network. The identification information of the access network to be deleted is IP-CAN type information of the access network.

A third implementation, on the basis of the foregoing second implementation, service data flow(s) transmitted in the deleted access network migrates to a remaining access network. The indication information, on the basis of the first or second implementation, may further include migrating the service data flow(s) transmitted in the access network to be deleted to the remaining access network.

In this embodiment, the PCEF entity receives the indication information sent by the PCRF entity, and the indication information includes indication information for indicating that the PCEF entity deletes an access network from the multi-access IP-CAN session; the PCEF entity initiates a process of deleting the access network from the multi-access IP-CAN session according to the indication information. It is implemented to delete an access network from the multi-access IP-CAN session when the network policy changes or when the UE subscription changes. The problem that the IP flow mobility cannot be canceled when the network policy changes or when the UE subscription changes is avoided.

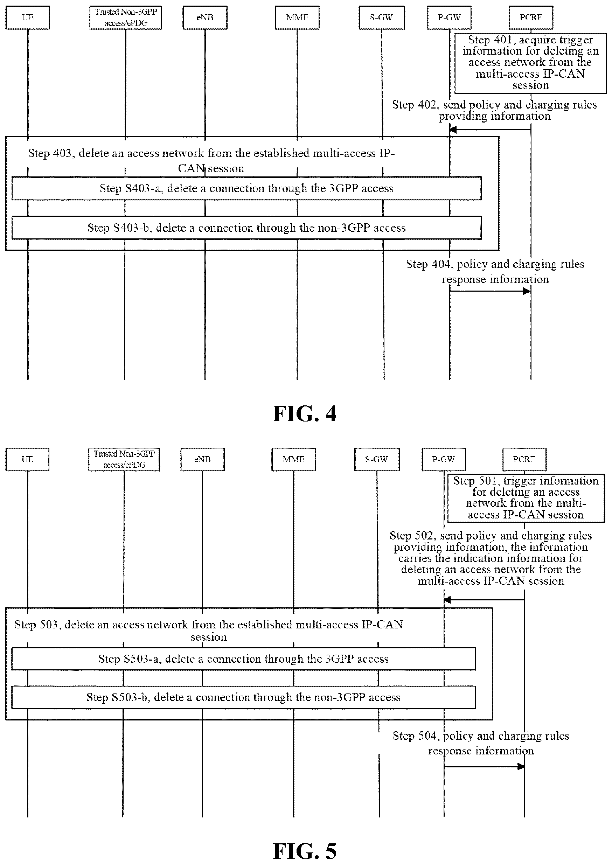

FIG. 4 is a flowchart of a third IP flow mobility method according to an embodiment of the present invention. As shown in FIG. 4, the applicable scenario of the embodiment is that the indication information includes at least one of the following information: indication information of NBIFOM not supporting the IP-CAN session, indication information of NBIFOM not authorizing the IP-CAN session, or indication information for deleting at least one access network. It should be noted that the PCRF entity is configured in the P-GW. The IP flow mobility method provided by the present invention includes the following steps.

In step 401, the PCRF entity acquires trigger information for deleting an access network from the multi-access IP-CAN session.

In this embodiment, the triggering information may include that: a network policy changes, or subscription information of the UE changes. That is, the PCRF determines that the network-based IP flow mobility is not applicable to the IP-CAN session. The IP-CAN session includes the multi-access IP-CAN session established by the UE with the P-GW through at least two access networks.

In step 402, the PCRF entity sends policy and charging rules providing information to the PCEF entity, and the information carries the indication information for deleting an access network from the multi-access IP-CAN session.

In the embodiment, the indication information is used for triggering a process that the PCEF deletes an access network from the multi-access IP-CAN session. The indication information includes at least one of the following information: indication information for a NBIFOM not supporting, indication information for the NBIFOM not authorizing, or indication information for deleting at least one access network.

In step 403, the PCEF deletes the access network from the established multi-access IP-CAN session according to the indication information and the configuration policy.

In an exemplary embodiment, execute step S403-a or step S403-b.

For example, in step S403-a, the PCEF deletes a connection through the 3GPP access according to the indication information and the configuration policy. In the detailed implementation, the P-GW where the PCEF is located initiates a process of a P-GW initiated bearer deactivation to delete a default bearer and all dedicated bearers in the 3GPP access, but the P-GW may maintain the IP address.

In step S403-b, the PCEF deletes a connection through the non-3GPP access according to the indication information and the configuration policy. In the detailed implementation, the P-GW where the PCEF is located initiates a process of a P-GW initiated resource allocation deactivation to delete a default bearer and all dedicated bearers in the non-3GPP access, but the P-GW may maintain the IP address.

In step 404, the PCEF sends policy and charging rules providing response information to the PCRF.

It should be noted that, before executing the step S403-a, the PCEF may migrate service flows transmitted in the 3GPP access to the non-3GPP access; or before executing the step S403-b, the PCEF may migrate service flows transmitted in the non-3GPP access to the 3GPP access.

FIG. 5 is a flowchart of a fourth IP flow mobility method according to an embodiment of the present invention. As shown in FIG. 5, the applicable scenario of the embodiment is that: on the basis of the indication information including at least one of the following information: indication information for a NBIFOM not supporting, indication information for the NBIFOM not authorizing, or indication information for deleting at least one access network, the policy and charging rules information may further include identification information of an access network to be deleted. It should be noted that the PCRF entity is configured in the P-GW. The IP flow mobility method provided by the present invention includes the following steps.

In step 501, the PCRF entity acquires trigger information for deleting an access network from the multi-access IP-CAN session.

In the embodiment, the triggering information may include that: a network policy changes or subscription information of the UE changes. That is, the PCRF determines that a network-based IP flow mobility has been not applicable to the IP-CAN session. The IP-CAN session includes the multi-access IP-CAN session established by the UE with the P-GW through at least two access networks.

In step 502, the PCRF entity sends policy and charging rules providing information to the PCEF entity, and the information carries the indication information for deleting an access network from the multi-access IP-CAN session.

In the embodiment, the indication information is used for triggering the PCEF to initiate a process of deleting the access network from the multi-access IP-CAN session. On the basis that the indication information includes at least one of the following information: indication information for a NBIFOM not supporting, indication information for the NBIFOM not authorizing, or indication information for deleting at least one access network, the indication information may further include identification information of an access network to be deleted. The identification information may be IP-CAN type indication information (that is, 3GPP_Evolved Packet System (EPS) or Non_3GPP_EPS).

In step 503, the PCEF deletes an access network from the established multi-access IP-CAN session according to the indication information.

Specifically, if the indication information of an access network that needs to be deleted indicates that the 3GPP access network is deleted, then execute step S503-a. If the indication information of an access network that needs to be deleted indicates that the non-3GPP access network is deleted, then execute step S503- b.

In step S503-a, a connection through the 3GPP access is deleted. In the detailed implementation, the P-GW where the PCEF is located initiates a process of a P-GW initiated bearer deactivation to delete a default bearer and all dedicated bearers in the 3GPP access, but the P-GW may maintain the IP address.

In step S503-b, a connection through the non-3GPP access is deleted. In the detailed implementation, the P-GW where the PCEF is located initiates a process of a P-GW initiated resource allocation deactivation to delete a default bearer and all dedicated bearers in the non-3GPP access, but the P-GW may maintain the IP address.

In step 504, the PCEF sends policy and charging rules providing response information to the PCRF.

It should be noted that, before executing the step S503-a, the PCEF may migrate service flows transmitted in the 3GPP access to the non-3GPP access; or before executing the step S503-b, the PCEF may migrate service flows transmitted in the non-3GPP access to the 3GPP access.

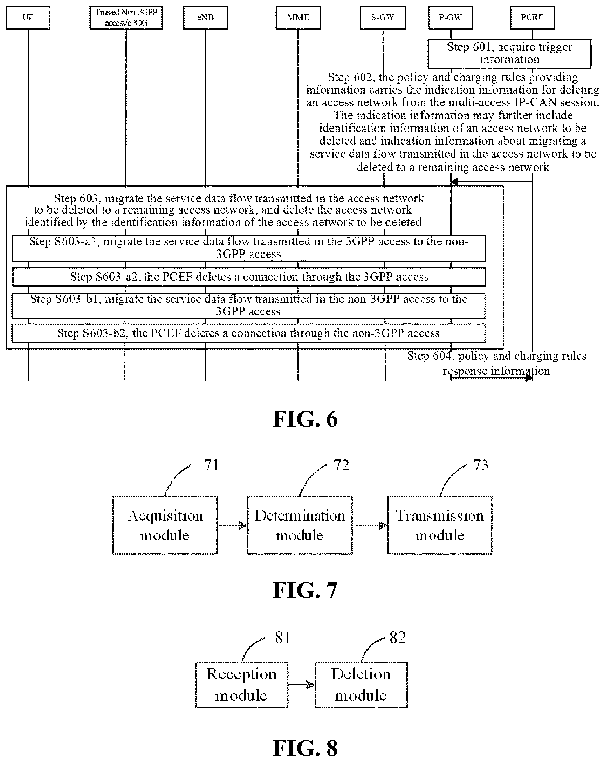

FIG. 6 is a flowchart of a fifth IP flow mobility method according to an embodiment of the present invention. As shown in FIG. 6, the applicable scenario of the embodiment is that: on the basis of that indication information includes the indication information in the embodiment shown in FIG. 5, the indication information may further include migrating a service data flow transmitted in an access network to be deleted to a remaining access network. The IP flow mobility method provided by the present invention includes the following steps.

In step 601, the PCRF entity acquires trigger information, and the trigger information is information for deleting an access network from the multi-access IP-CAN session.

In the embodiment, the triggering information may include that: a network policy changes or subscription information of the UE changes. That is, the PCRF determines that a network-based IP flow mobility is not applicable to the IP-CAN session already. The IP-CAN session includes the multi-access IP-CAN session established by the UE with the P-GW through at least two access networks.

In step 602, the PCRF entity sends policy and charging rules providing information to the PCEF entity, and the policy and charging rules providing information carries the indication information for deleting an access network from the multi-access IP-CAN session. The indication information may further include identification information of an access network to be deleted and indication information about migrating a service data flow transmitted in the access network to be deleted to a remaining access network.

In the embodiment, the indication information is used for triggering the PCEF to delete an access network from the multi-access IP-CAN session. The indication information includes at least one of the following information: indication information for a NBIFOM not supporting, indication information for the NBIFOM not authorizing, or indication information for deleting at least one access network. The indication information may further include identification information of an access network to be deleted and indication information about migrating a service data flow transmitted in the access network to be deleted to a remaining access network.

In step 603, the P-GW migrates the service data flow transmitted in the access network to be deleted to a remaining access network according to the indication information (in which the indication information may be a policy and charging control (PCC) rule of migrating the service data flow from the access network to be deleted to the remaining access network), and the access network identified by the identification information of the access network to be deleted is deleted.

Specifically, if the indication information of an access network that needs to be deleted indicates to delete the 3GPP access, then execute step S603-a1 and step S603-a2. If the indication information of an access network that needs to be deleted indicates to delete the non-3GPP access, then execute step S603-b1 and step S603-b2.

In step S603-a1, the PCEF migrates the service data flow transmitted in the 3GPP access to the non-3GPP access according to the PCC rule.

In step S603-a2, the PCEF deletes a connection through the 3GPP access. In the detailed implementation, the P-GW where the PCEF is located initiates a process of a P-GW initiated bearer deactivation to delete a default bearer and all dedicated bearers in the 3GPP access, but the P-GW may maintain the IP address.

In step 5603-b1, the PCEF migrates the service data flow transmitted in the non-3GPP access to the 3GPP access according to the PCC rule.

In step S603-b2, the PCEF deletes a connection through the non-3GPP access. In the detailed implementation, the P-GW where the PCEF is located initiates a process of a P-GW initiated resource allocation deactivation to delete a default bearer and all dedicated bearers in the non-3GPP access, but the P-GW may maintain the IP address.

In step 604, the PCEF sends policy and charging rules providing response information to the PCRF.

FIG. 7 is a schematic diagram of a first IP flow mobility device according to an embodiment of the present invention. As shown in FIG. 7, the IP flow mobility device provided by the present invention includes: an acquisition module 71, a determination module 72, and a transmission module 73.

The acquisition module 71 is configured to acquire trigger information, and the trigger information includes information for deleting an access network from the multi-access IP-CAN session.

The determination module 72 is configured to determine to send indication information to the PCEF entity according to the trigger information, and the indication information includes indicating the PCEF entity to delete the access network from the multi-access IP-CAN session, so as to make the PCEF entity initiates a process of deleting the access network.

In the embodiment, the PCRF entity acquires the trigger information, and the triggering information includes information for deleting an access network from the multi-access IP-CAN session; the PCRF entity determines to send indication information to the PCEF entity according to the trigger information, and the indication information includes indicating the PCEF entity to delete one access network from the multi-access IP-CAN session so as to make the PCEF entity initiate a process of deleting the access network from the multi-access IP-CAN session. It is implemented to delete an access network from the multi-access IP-CAN session when the network policy changes or the UE subscription changes. The problem that the IP flow mobility cannot be canceled when the network policy changes or when the UE subscription changes is avoided.

On the basis of the foregoing embodiments, the indication information includes at least one of the following information: indication information for a NBIFOM not supporting, indication information for the NBIFOM not authorizing, or indication information for deleting at least one access network.

In one exemplary embodiment, on the basis of the foregoing embodiments, the indication information further includes identification information of an access network to be deleted.

In one exemplary embodiment, on the basis of the foregoing embodiments, the identification information of the access network to be deleted includes IP-CAN type information of the access network to be deleted.

In one exemplary embodiment, on the basis of the foregoing embodiments, the indication information further includes: indication information about migrating a service data flow transmitted in the access network to be deleted to a remaining access network. The remaining access network includes an access network, except for the access network to be deleted, of the at least two access networks.

In one exemplary embodiment, on the basis of the foregoing embodiments, the trigger information includes information that a network policy changes or information that subscription information of the UE changes.

In the embodiment, it is implemented to delete an access network from the multi-access IP-CAN session when the network policy changes or the UE subscription changes. The problem that the IP flow mobility cannot be canceled when the network policy changes or when the UE subscription changes is avoided.

FIG. 8 is a schematic diagram of a second IP flow mobility device according to an embodiment of the present invention. As shown in FIG. 8, the IP flow mobility device provided by the present invention includes a reception module 81 and a deletion module 82.

The reception module 81 is configured to receive indication information sent by a PCRF entity, and the indication information includes indication information indicating that a PCEF entity deletes an access network from a multi-access IP-CAN session;

The deletion module 82 is configured to initiate a process of deleting the access network from the multi-access IP-CAN session according to the indication information.

In the embodiment, the PCEF entity receives the indication information sent by the PCRF entity, and the indication information is used for triggering the PCEF entity to initiate a process of deleting an access network from the multi-access IP-CAN session; the PCEF entity initiates the process of deleting the access network from the multi-access IP-CAN session according to the indication information. It is implemented to delete an access network from the multi-access IP-CAN session when the network policy changes or when the UE subscription changes. The problem that the IP flow mobility cannot be canceled when the network policy changes or when the UE subscription changes is avoided

On the basis of the foregoing embodiments, the indication information includes at least one of the following information: indication information for a NBIFOM not supporting, indication information for the NBIFOM not authorizing, or indication information for deleting at least one access network.

The deleting module initiates a process of deleting the access network from the multi-access IP-CAN session according to the indication information.

In one exemplary embodiment, on the basis of the foregoing embodiments, the indication information includes at least one of the following information: indication information for a NBIFOM not supporting, indication information for the NBIFOM not authorizing, or indication information for deleting at least one access network.

In one exemplary embodiment, on the basis of the foregoing embodiments, the indication information further includes identification information of the access network to be deleted.

In one exemplary embodiment, on the basis of the foregoing embodiments, the identification information of an access network to be deleted includes IP-CAN type information of the access network to be deleted.

In one exemplary embodiment, on the basis of the foregoing embodiments, the indication information further includes indication information about migrating a service data flow transmitted in the access network to be deleted to a remaining access network. The remaining access network includes an access network, except for the access network to be deleted, of the at least two access networks.

In the embodiment, it is implemented to delete an access network from the multi-access IP-CAN session when the network policy changes or the UE subscription changes. The problem that the IP flow mobility cannot be canceled when the network policy changes or when the UE subscription changes is avoided.

The present invention further provides an IP flow mobility system, including: an IP flow mobility device shown in FIG. 7 and an IP flow mobility device shown in FIG. 8.

While the embodiments disclosed by the present invention have been described above, the described embodiments are merely for the purpose of understanding the present invention and not intending to limit the present invention..

### INDUSTRIAL APPLICABILITY

Embodiments of the present invention include that: the PCRF entity acquires the trigger information, and the triggering information includes information for deleting an access network from the multi-access IP-CAN session; the PCRF entity determines to send indication information to the PCEF entity according to the trigger information, and the indication information includes indicating the PCEF entity to delete one access network from the multi-access IP-CAN session so as to make the PCEF entity initiate a process of deleting the access network from the multi-access IP-CAN session. It is implemented to delete an access network from the multi-access IP-CAN session when the network policy changes or the UE subscription changes. The problem that the IP flow mobility cannot be canceled when the network policy changes or when the UE subscription changes is avoided.

## Claims

1. An internet protocol, IP, flow mobility method, applied in a scenario that a user equipment, UE, establishes a multi-access IP-connectivity access network, IP-CAN, session with a packet data network gateway, P-GW, through at least two access networks, comprising:
an acquiring step (S201) acquiring, by a policy and charging rules function, PCRF, entity, trigger information, wherein the trigger information comprises information for deleting an access network from the multi-access IP-CAN session; and
a determining step (S202) determining, by the PCRF entity according to the trigger information, to send indication information to a policy and charging enforcement function, PCEF, entity, wherein the indication information comprises indicating the PCEF entity to delete the access network from the multi-access IP-CAN session so as to make the PCEF entity initiate a process of deleting the access network from the multi-access IP-CAN session;
**characterised in that** the indication information further comprises: identification information of an access network to be deleted,
preferably, the identification information of the access network to be deleted comprises IP-CAN type information of the access network to be deleted;
wherein the indication information further comprises: indication information about migrating a service data flow transmitted in the access network to be deleted to a remaining access network, wherein the remaining access network comprises an access network, except for the access network to be deleted, of the at least two access networks.

2. The method according to claim 1, wherein the indication information comprises at least one of the following information:
indication information for a network-based IP flow mobility, NBIFOM, not supporting, indication information for the NBIFOM not authorizing, or indication information for deleting at least one access network.

3. The method according to any one of claims 1-2, wherein the trigger information comprises one of: information that a network policy changes, or information that subscription information of the UE changes.

4. An internet protocol, IP, flow mobility method, applied in a scenario that a user equipment, UE, establishes a multi-access IP connectivity access network, IP-CAN, session with a packet data network gateway, P-GW, through at least two access networks, comprising:
a receiving step (S301) receiving, by a policy and charging enforcement function, PCEF, entity, indication information sent by a policy and charging rules function, PCRF, entity, wherein the indication information comprises indication information for indicating that the PCEF entity deletes an access network from the multi-access IP-CAN session;
an initiating step (S302) initiating, by the PCEF entity according to the indication information, a process of deleting the access network from the multi-access IP-CAN session;
**characterised in that** the indication information further comprises: identification information of an access network to be deleted,
preferably, the identification information of the access network to be deleted comprises IP-CAN type information of the access network to be deleted;
wherein the indication information further comprises: indication information about migrating a service data flow transmitted in the access network to be deleted to a remaining access network, wherein the remaining access network comprises an access network, except for the access network to be deleted, of the at least two access networks.

5. The method according to claim 4, wherein the indication information comprises at least one of the following information: indication information for a network-based IP flow mobility, NBIFOM, not supporting, indication information for the NBIFOM not authorizing, or indication information for deleting at least one access network.

6. An internet protocol, IP, flow mobility device, comprises:
an acquisition module (71), configured to acquire trigger information, wherein the trigger information comprises information for deleting an access network from a multi-access IP connectivity access network, IP-CAN, session; and
a determination module (72), configured to determine to send indication information to a policy and charging enforcement function, PCEF, entity according to the trigger information, wherein the indication information comprises indicating the PCEF entity to delete the access network from the multi-access TP-CAN session so as to make the PCEF entity initiate a process of deleting the access network;
**characterised in that** the indication information further comprises: identification information of an access network to be deleted,
preferably, the identification information of the access network to be deleted comprises IP-CAN type information of the access network to be deleted;
wherein the indication information further comprises: indication information about migrating a service data flow transmitted in the access network to be deleted to a remaining access network, wherein the remaining access network comprises an access network, except for the access network to be deleted, of the at least two access networks

7. An internet protocol, IP, flow mobility device, comprising:
a reception module (81), configured to receive indication information sent by a policy and charging rules function, PCRF, entity, wherein the indication information comprises indication information indicating that a policy and charging enforcement function, PCEF, entity deletes an access network from a multi-access IP connectivity access network, IP-CAN, session; and
a deletion module (82), configured to initiate a process of deleting the access network from the multi-access IP-CAN session according to the indication information;
**characterised in that** the indication information further comprises: identification information of an access network to be deleted,
preferably, the identification information of the access network to be deleted comprises IP-CAN type information of the access network to be deleted;
wherein the indication information further comprises: indication information about migrating a service data flow transmitted in the access network to be deleted to a remaining access network, wherein the remaining access network comprises an access network, except for the access network to be deleted, of the at least two access networks.

8. The device according to claim 7, wherein the indication information comprises at least one of the following information: indication information for a network-based IP flow mobility, NBIFOM, not supporting, indication information for the NBIFOM not authorizing, or indication information for deleting at least one access network.

9. An internet protocol, IP, flow mobility system, comprising: the IP flow mobility device according to claim 6 and the IP flow mobility device according to any one of claims 7-8

## Patentansprüche

1. Internetprotokoll(IP)-Strommobilitätsverfahren, das in einem Szenario angewendet wird, in dem ein Benutzergerät (user equipment - UE) eine Mehrfachzugriffs-IP-Konnektivitätszugriffsnetzwerk(IP-connectivity access network - IP-CAN)-Sitzung mit einem Paketdatennetzwerk-Gateway (P-GW) über mindestens zwei Zugriffsnetzwerke herstellt, Folgendes umfassend:
einen Erfassungsschritt (S201), der durch eine Policy-and-Charging-Rules-Function(PCRF)-Entität Auslöseinformationen erfasst, wobei die Auslöseinformationen Informationen zum Löschen eines Zugriffsnetzwerks aus der Mehrfachzugriff-IP-CAN-Sitzung umfassen; und
einen Bestimmungsschritt (S202), der durch die PCRF-Entität gemäß den Auslöseinformationen bestimmt, Anzeigeinformationen an eine Policy-and-Charging-Enforcement-Function(PCEF)-Entität zu senden, wobei die Anzeigeinformationen umfassen, der PCEF-Entität anzuzeigen, das Zugriffsnetzwerk aus der Mehrfachzugriff-IP-CAN-Sitzung zu löschen, um die PCEF-Entität zu veranlassen, einen Prozess zum Löschen des Zugriffsnetzwerks aus der Mehrfachzugriff-IP-CAN-Sitzung einzuleiten;
**dadurch gekennzeichnet, dass** die Anzeigeinformationen ferner Folgendes umfassen: Identifikationsinformationen eines zu löschenden Zugriffsnetzwerks,
wobei vorzugsweise die Identifikationsinformationen des zu löschenden Zugriffsnetzwerks IP-CAN-Typ-Informationen des zu löschenden Zugriffsnetzwerks umfassen;
wobei die Anzeigeinformationen ferner Folgendes umfassen: Anzeigeinformationen über das Migrieren eines in dem zu löschenden Zugriffsnetzwerk übertragenen Dienstdatenstroms zu einem verbleibenden Zugriffsnetzwerk, wobei das verbleibende Zugriffsnetzwerk ein Zugriffsnetzwerk der mindestens zwei Zugriffsnetzwerke mit Ausnahme des zu löschenden Zugriffsnetzwerks umfasst.

2. Verfahren nach Anspruch 1, wobei die Anzeigeinformationen mindestens eine der folgenden Informationen umfassen:
Anzeigeinformationen für eine nicht unterstützende netzwerkbasierte IP-Strommobilität (network-based IP flow mobility - NBIFOM), Anzeigeinformationen für die nicht autorisierende NBIFOM oder Anzeigeinformationen zum Löschen mindestens eines Zugriffsnetzwerks.

3. Verfahren nach einem der Ansprüche 1-2, wobei die Auslöseinformationen eines von Folgendem umfassen:
Informationen, dass sich eine Netzwerkrichtlinie ändert, oder Informationen, dass sich Teilnehmerinformationen des UE ändern.

4. Internetprotokoll(IP)-Strommobilitätsverfahren, das in einem Szenario angewendet wird, in dem ein Benutzergerät (UE) eine Mehrfachzugriffs-IP-Konnektivitätszugriffsnetzwerk(IP-CAN)-Sitzung mit einem Paketdatennetzwerk-Gateway (P-GW) über mindestens zwei Zugriffsnetzwerke herstellt, Folgendes umfassend:
einen Empfangsschritt (S301), der durch eine Policy-and-Charging-Enforcement-Function(PCEF)-Entität von einer Policy-and-Charging-Rules-Function(PCRF)-Entität gesendete Anzeigeinformationen empfängt, wobei die Anzeigeinformationen Anzeigeinformationen zum Anzeigen, dass die PCEF-Entität ein Zugriffsnetzwerk aus der Mehrfachzugriff-IP-CAN-Sitzung löscht, umfassen;
einen Einleitungsschritt (S302), der durch die PCEF-Entität gemäß den Anzeigeinformationen einen Prozess zum Löschen des Zugriffsnetzwerks aus der Mehrfachzugriff-IP-CAN-Sitzung einleitet;
**dadurch gekennzeichnet, dass** die Anzeigeinformationen ferner Folgendes umfassen: Identifikationsinformationen eines zu löschenden Zugriffsnetzwerks,
wobei vorzugsweise die Identifikationsinformationen des zu löschenden Zugriffsnetzwerks IP-CAN-Typ-Informationen des zu löschenden Zugriffsnetzwerks umfassen;
wobei die Anzeigeinformationen ferner Folgendes umfassen:
Anzeigeinformationen über das Migrieren eines in dem zu löschenden Zugriffsnetzwerk übertragenen Dienstdatenstroms zu einem verbleibenden Zugriffsnetzwerk, wobei das verbleibende Zugriffsnetzwerk ein Zugriffsnetzwerk der mindestens zwei Zugriffsnetzwerke mit Ausnahme des zu löschenden Zugriffsnetzwerks umfasst.

5. Verfahren nach Anspruch 4, wobei die Anzeigeinformationen mindestens eine der folgenden Informationen umfassen:
Anzeigeinformationen für eine nicht unterstützende netzwerkbasierte IP-Strommobilität (NBIFOM), Anzeigeinformationen für die nicht autorisierende NBIFOM oder Anzeigeinformationen zum Löschen mindestens eines Zugriffsnetzwerks.

6. Internetprotokoll(IP)-Strommobilitätsvorrichtung, Folgendes umfassend:
ein Erfassungsmodul (71), das konfiguriert ist, um Auslöseinformationen zu erfassen, wobei die Auslöseinformationen Informationen zum Löschen eines Zugriffsnetzwerks aus einer Mehrfachzugriff-IP-Konnektivitätszugriffsnetzwerk(IP-CAN)-Sitzung umfassen; und
ein Bestimmungsmodul (72), das konfiguriert ist zu bestimmen, Anzeigeinformationen gemäß den Auslöseinformationen an eine Policy-and-Charging-Enforcement-Function(PCEF)-Entität zu senden, wobei die Anzeigeinformationen umfassen, der PCEF-Entität anzuzeigen, das Zugriffsnetzwerk aus der Mehrfachzugriff-IP-CAN-Sitzung zu löschen, um die PCEF-Entität zu veranlassen, einen Prozess zum Löschen des Zugriffsnetzwerks einzuleiten;
**dadurch gekennzeichnet, dass** die Anzeigeinformationen ferner Folgendes umfassen: Identifikationsinformationen eines zu löschenden Zugriffsnetzwerks,
wobei vorzugsweise die Identifikationsinformationen des zu löschenden Zugriffsnetzwerks IP-CAN-Typ-Informationen des zu löschenden Zugriffsnetzwerks umfassen;
wobei die Anzeigeinformationen ferner Folgendes umfassen:
Anzeigeinformationen über das Migrieren eines in dem zu löschenden Zugriffsnetzwerk übertragenen Dienstdatenstroms zu einem verbleibenden Zugriffsnetzwerk, wobei das verbleibende Zugriffsnetzwerk ein Zugriffsnetzwerk der mindestens zwei Zugriffsnetzwerke mit Ausnahme des zu löschenden Zugriffsnetzwerks umfasst.

7. Internetprotokoll(IP)-Strommobilitätsvorrichtung, Folgendes umfassend:
ein Empfangsmodul (81), das konfiguriert ist, um durch eine Policy-and-Charging-Rules-Function(PCRF)-Entität gesendete Anzeigeinformationen zu empfangen, wobei die Anzeigeinformationen Anzeigeinformationen umfassen, die anzeigen, dass eine Policy-and-Charging-Enforcement-Function(PCEF)-Entität ein Zugriffsnetzwerk aus einer Mehrfachzugriff-IP-Konnektivitätszugriffsnetzwerk(IP-CAN)-Sitzung löscht; und
ein Löschmodul (82), das konfiguriert ist, um einen Prozess zum Löschen des Zugriffsnetzwerks aus der Mehrfachzugriff-IP-CAN-Sitzung gemäß den Anzeigeinformationen einzuleiten;
**dadurch gekennzeichnet, dass** die Anzeigeinformationen ferner Folgendes umfassen: Identifikationsinformationen eines zu löschenden Zugriffsnetzwerks,
wobei die Identifikationsinformationen des zu löschenden Zugriffsnetzwerks vorzugsweise IP-CAN-Typ-Informationen des zu löschenden Zugriffsnetzwerks umfassen;
wobei die Anzeigeinformationen ferner Folgendes umfassen:
Anzeigeinformationen über das Migrieren eines in dem zu löschenden Zugriffsnetzwerk übertragenen Dienstdatenstroms zu einem verbleibenden Zugriffsnetzwerk, wobei das verbleibende Zugriffsnetzwerk ein Zugriffsnetzwerk der mindestens zwei Zugriffsnetzwerke mit Ausnahme des zu löschenden Zugriffsnetzwerks umfasst.

8. Vorrichtung nach Anspruch 7, wobei die Anzeigeinformationen mindestens eine der folgenden Informationen umfassen:
Anzeigeinformationen für eine nicht unterstützende netzwerkbasierte IP-Strommobilität (NBIFOM), Anzeigeinformationen für die nicht autorisierende NBIFOM oder Anzeigeinformationen zum Löschen mindestens eines Zugriffsnetzwerks.

9. Internetprotokoll(IP)-Strommobilitätssystem, Folgendes umfassend: die IP-Strommobilitätsvorrichtung nach Anspruch 6 und die IP-Strommobilitätsvorrichtung nach einem der Ansprüche 7-8.

## Revendications

1. Procédé de mobilité de flux de protocole internet, IP, appliqué dans un scénario dans lequel un équipement utilisateur, UE, établit une session de réseau d'accès à connectivité IP multi-accès, IP-CAN, avec une passerelle de réseau de données par paquets, P-GW, via au moins deux réseaux d'accès, comprenant:
une étape d'acquisition (S201) acquérant, par une entité de fonction de politique et de règles de facturation, PCRF, des informations de déclenchement, dans lequel les informations de déclenchement comprennent des informations destinées à supprimer un réseau d'accès de la session IP-CAN multi-accès ; et
une étape de détermination (S202) déterminant, par l'entité PCRF en fonction des informations de déclenchement, l'envoi d'informations d'indication à une entité de fonction d'application de politique et de facturation, PCEF, dans lequel les informations d'indication comprennent l'indication à l'entité PCEF de supprimer le réseau d'accès en provenance de la session IP-CAN multi-accès de manière à faire lancer par l'entité PCEF un processus de suppression du réseau d'accès de la session IP-CAN multi-accès ;
**caractérisé en ce que** les informations d'indication comprennent en outre : des informations d'identification d'un réseau d'accès à supprimer,
de préférence, les informations d'identification du réseau d'accès à supprimer comprennent des informations de type IP-CAN du réseau d'accès à supprimer;
dans lequel les informations d'indication comprennent en outre :
des informations d'indication concernant la migration d'un flux de données de service transmis dans le réseau d'accès à supprimer vers un réseau d'accès restant, dans lequel le réseau d'accès restant comprend un réseau d'accès, à l'exception du réseau d'accès à supprimer, des au moins deux réseaux d'accès.

2. Procédé selon la revendication 1, dans lequel les informations d'indication comprennent au moins l'une des informations suivantes:
des informations d'indication pour une mobilité de flux IP basée sur le réseau, NBIFOM, ne supportant pas au moins un réseau d'accès, des informations d'indication pour le NBIFOM n'autorisant pas celui-ci, ou des informations d'indication destinées à supprimer celui-ci.

3. Procédé selon l'une quelconque des revendications 1 et 2, dans lequel les informations de déclenchement comprennent l'une : d'une information selon laquelle une politique de réseau change, ou d'une information selon laquelle des informations d'abonnement de l'UE changent.

4. Procédé de mobilité de flux de protocole internet, IP, appliqué dans un scénario dans lequel un équipement utilisateur, UE, établit une session de réseau d'accès à connectivité IP multi-accès, IP-CAN, avec une passerelle de réseau de données par paquets, P-GW, via au moins deux réseaux d'accès, comprenant:
une étape de réception (S301) recevant, par une entité de fonction d'application de politique et de facturation, PCEF, des informations d'indication envoyées par une entité de fonction de politique et de règles de facturation, PCRF, dans lequel les informations d'indication comprennent des informations d'indication pour indiquer que l'entité PCEF supprime un réseau d'accès à partir de la session IP-CAN multi-accès ;
une étape de lancement (S302) lançant, par l'entité PCEF en fonction des informations d'indication, un processus de suppression du réseau d'accès de la session IP-CAN multi-accès ;
**caractérisé en ce que** les informations d'indication comprennent en outre : des informations d'identification d'un réseau d'accès à supprimer,
de préférence, les informations d'identification du réseau d'accès à supprimer comprennent des informations de type IP-CAN du réseau d'accès à supprimer ;
dans lequel les informations d'indication comprennent en outre :
des informations d'indication concernant la migration d'un flux de données de service transmis dans le réseau d'accès à supprimer vers un réseau d'accès restant, dans lequel le réseau d'accès restant comprend un réseau d'accès, à l'exception du réseau d'accès à supprimer, des au moins deux réseaux d'accès.

5. Procédé selon la revendication 4, dans lequel les informations d'indication comprennent au moins l'une des informations suivantes: des informations d'indication pour une mobilité de flux IP basée sur le réseau, NBIFOM, ne supportant pas au moins un réseau d'accès, des informations d'indication pour le NBIFOM n'autorisant pas celui-ci, ou des informations d'indication destinées à supprimer celui-ci.

6. Dispositif de mobilité de flux de protocole internet, IP, comprend:
un module d'acquisition (71), configuré pour acquérir des informations de déclenchement, dans lequel les informations de déclenchement comprennent des informations destinées à supprimer un réseau d'accès d'une session de réseau d'accès à connectivité IP multi-accès, IP-CAN ; et
un module de détermination (72), configuré pour déterminer l'envoi d'informations d'indication à une entité de fonction d'application de politique et de facturation, PCEF, selon les informations de déclenchement, dans lequel les informations d'indication comprennent l'indication de l'entité PCEF pour supprimer le réseau d'accès de la session IP-CAN multi-accès de manière à faire lancer par l'entité PCEF un processus de suppression du réseau d'accès ;
**caractérisé en ce que** les informations d'indication comprennent en outre : des informations d'identification d'un réseau d'accès à supprimer,
de préférence, les informations d'identification du réseau d'accès à supprimer comprennent des informations de type IP-CAN du réseau d'accès à supprimer ;
dans lequel les informations d'indication comprennent en outre :
des informations d'indication concernant la migration d'un flux de données de service transmis dans le réseau d'accès à supprimer vers un réseau d'accès restant, dans lequel le réseau d'accès restant comprend un réseau d'accès, à l'exception du réseau d'accès à supprimer, des au moins deux réseaux d'accès.

7. Dispositif de mobilité de flux de protocole internet, IP, comprenant:
un module de réception (81), configuré pour recevoir des informations d'indication envoyées par une entité de fonction de politique et de règles de facturation, PCRF, dans lequel les informations d'indication comprennent des informations d'indication indiquant qu'une entité de fonction d'application de politique et de facturation, PCEF, supprime un réseau d'accès d'une session de réseau d'accès à connectivité IP multi-accès, IP-CAN ; et
un module de suppression (82), configuré pour lancer un processus de suppression du réseau d'accès de la session IP-CAN multi-accès selon les informations d'indication ;
**caractérisé en ce que** les informations d'indication comprennent en outre : des informations d'identification d'un réseau d'accès à supprimer,
de préférence, les informations d'identification du réseau d'accès à supprimer comprennent des informations de type IP-CAN du réseau d'accès à supprimer ;
dans lequel les informations d'indication comprennent en outre :
des informations d'indication concernant la migration d'un flux de données de service transmis dans le réseau d'accès à supprimer vers un réseau d'accès restant, dans lequel le réseau d'accès restant comprend un réseau d'accès, à l'exception du réseau d'accès à supprimer, des au moins deux réseaux d'accès.

8. Dispositif selon la revendication 7, dans lequel les informations d'indication comprennent au moins l'une des informations suivantes: des informations d'indication pour une mobilité de flux IP basée sur le réseau, NBIFOM, ne supportant pas au moins un réseau d'accès, des informations d'indication pour le NBIFOM n'autorisant pas celui-ci, ou des informations d'indication destinées à supprimer celui-ci.

9. Système de mobilité de flux à protocole Internet, IP, comprenant: le dispositif de mobilité de flux IP selon la revendication 6 et le dispositif de mobilité de flux IP selon l'une quelconque des revendications 7 et 8.
